# EUROPEAN PATENT SPECIFICATION

(11) **EP 4 311 953 B1**
(45) Date of publication and mention of the grant of the patent: **08.04.2026**
(21) Application number: 22186722.9
(22) Date of filing: 25.07.2022
(51) Int. Cl.: F16D 55/00, F16D 55/226, F16D 65/097, F16D 63/00

(54) **PARK BRAKE ASSEMBLY FOR A VEHICLE**
FESTSTELLBREMSEINRICHTUNG FÜR EIN FAHRZEUG
DISPOSITIF DE FREINAGE DE STATIONNEMENT POUR UN VÉHICULE

(43) Date of publication of application: 31.01.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 80939 München (DE); HöS, Levente, 1047 Budapest (HU); HOLLOSI, Mate, 1097 Budapest (HU); KLINGNER, Matthias, 82276 Adelshofen (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU)

(56) References cited:
- DE-A1- 102019 109 465
- DE-A1- 19 800 643
- DE-B4- 102015 200 737
- KR-A- 20090 102 898
- US-A- 3 003 587
- US-A1- 2019 056 005

## Description

The present invention relates to a park brake assembly for a vehicle, a brake assembly for a vehicle and a vehicle comprising such brake assembly.

In today's commercial vehicles usually the parking brake is integrated in the service brake. From a cost point of view the integrated brake version is highly attractive. However, to fulfill the parking brake function, a separate parking brake actuator, e.g. a spring element, for pre-stressing an auxiliary piston, is needed. This portion of the park brake arrangement is quite space consuming, since it has to be assured that the force of the spring is sufficient enough over the whole stroke.

In alternative approaches, the parking brake is separated from the service brake and may be based on a form-fit engagement of the parking brake in a member to be braked such as a brake disc. For example, DE 10 2015 200 737 A1 discloses a disk brake having a brake disk, a brake carrier spanning the brake disk, a brake application device with a brake caliper and a clamping cylinder for applying at least one brake lining in the direction of the brake disk, and a parking brake device, wherein the parking brake device has a locking device with at least one between a release position and a functional position adjustable blocking element and a release device, wherein the blocking element in the functional position in a mating contour on the brake disc or on a shell inner surface of a wheel rim engages and wherein in the release position, the blocking element and the mating contour are disengaged. However, the blocking element and the mating contour of the brake disc or the like may not provide a predetermined relative positional relationship, in which the blocking member position accurately corresponds to the receiving portion of the mating contour. Accordingly, the blocking element may not sufficiently engage the mating contour and/or the engagement may cause undesired load schemes.

KR 2009 0102898 A relates to a parking brake apparatus for a vehicle including a brake disk, a fork plate, and a piston. The brake disk is fitted with a saw-toothed wheel in the circumference direction. The fork plate is engaged with the saw-toothed wheel of the brake disk and has an angular motion around a connection pin. The piston is reciprocated within a stationary cylinder by hydraulic pressure to operate the plate fork in the vertical direction.

DE 10 2015 200737 B4 relates to a disc brake, comprising a brake disc, a brake carrier spanning the brake disc, a clamping device with a brake caliper and an application cylinder for applying at least one brake pad in the direction of the brake disc, a parking brake device fixed to or integrated into a brake carrier. The parking brake device has a locking device with at least one intermediate a release position and a functional position adjustable locking element and a release device. The locking element in the functional position in a counter contour engages on the brake disc. In the release position the locking element and the counter contour are disengaged. The counter contour is designed as a toothing extending radially to the axis of rotation of the brake disc from an inner edge of the brake disc.

DE 198 00 643 A1 relates to a parking brake with at least one first part connected to a wheel and a second part fixed to the vehicle chassis and which is brought into engagement with the first part in order to hold the vehicle stationary. The first part has at least one opening and the second part has a protrusion which is fed into the opening when the parking brake is actuated, thereby providing a shape-locking connection between the wheel and the vehicle chassis.

DE 10 2019 109465 A1 relates to a braking system for a braking system for a vehicle with at least one vehicle wheel, comprising at least one friction brake assigned to the vehicle wheel, which acts during operation and / or in the parked state of the vehicle, the braking system comprising an additional mechanical locking device of the vehicle wheel, which locks the vehicle wheel in the parked state.

US 3 003 587 A relates to a hydraulic brake comprising a single rotatable brake disc secured to a rotatable spindle to be braked and a nonrotatable brake member slidably mounted for floating movement axial of said disc but restrained against rotation with said disc. The non-rotatable member comprising a member C-shaped in cross section having limbs flanking opposite sides of the disc, one of said limbs having cylinder means formed therein and extending therethrough in a direction axial of the disc, a piston removably mounted for axial sliding movement in said cylinder means. Friction pads are opposed to the disc, one of said pads being mounted on a limb of said C-shaped member and the other being mounted opposite thereto on said piston. Fluid pressure means for advancing said piston frictionally engage the friction pads with the disc. A locking mechanism is provided for positively locking the same disc against rotation, said locking mechanism including a number of widely spaced V-shaped notches in the outer periphery of the disc. Bolt means having a wedge-shaped end with a pair of flat converging sides complementary in shape to said notches radially engage in said notches and locking the disc and the nonrotatable member against relative rotation at any floating position of said member.

US 2019/056005 A1 relates to a parking brake and anti-theft apparatus for a vented disc brake, including a brake assembly, an actuator and a rocker or a locking arm. The brake assembly includes a first and second rotor plates separated by spacers and slots. The rocker and locking arm includes pawls extending from an edge, and are positioned adjacent to a circumference of the rotor plates, aligned between the rotor plates. The actuator moves the rocker and/or locking arm between locked and unlocked positions such that, in the locked configuration, the pawls are inserted into the slots, and in the unlocked configuration, the pawls are disposed outside the slots.

Therefore, it is an object of the present invention to provide a park brake assembly for a vehicle, a respective brake assembly, and a vehicle comprising such brake assembly capable of improving the engagement of a form-fit element of the park brake assembly into a counter-contour for braking a brake disc.

The object is solved by the subject-matter of the independent claims. Further aspects of the present invention are subject to the dependent claims.

According to the present invention, a park brake assembly for a vehicle comprises at least one park brake pad configured to apply a clamping force on a brake disc rotatable about a rotational axis, wherein the at least one park brake pad comprises a braking surface as contact surface for the brake disc to apply the clamping force, and a park brake pad carrier assembly carrying the at least one park brake pad and configured to move the at least one park brake pad toward the brake disc in an axial direction substantially perpendicular to the braking surface of the at least one park brake pad or to allow a respective movement of the at least one park brake pad. The braking surface of at least one park brake pad at least partially forms a park brake pad form-fit portion in correspondence to a brake disc form-fit portion of the brake disc for a braking pairing. Further, the park brake assembly comprises at least one local displacement member arranged between the at least one park brake pad and the park brake pad carrier assembly configured to allow a relative displacement of the at least one park brake pad with respect to the park brake pad carrier assembly in a direction within the braking surface plane.

In principle, the park brake assembly is configured to apply a clamping force on the brake disc by moving the at least one park brake pad in the axial direction substantially perpendicular to the braking surface of the at least one park brake pad, i.e. in the axial direction with respect to the rotational axis of the brake disc when the park brake assembly is comprised by a respective brake assembly, to allow the park brake pad form-fit portion to engage the brake disc form-fit portion. Since the park brake pad form-fit portion may not be ideally positioned opposed to the corresponding brake disc form-fit portion for a direct form-fit match, the at least one local displacement member allows the park brake pad to be moved by the brake disc upon contact to some extend in a direction within the park brake braking surface plane. Preferably, the at least one local displacement member is configured to allow the park brake pad to move at least in a direction of the projection of the rotational direction substantially perpendicular to the rotational axis and perpendicular to the radial direction.

The park brake pad carrier assembly may comprise an actuator mechanism to move the at least one park brake pad toward the brake disc in an axial direction substantially perpendicular to the braking surface of the at least one park brake pad. Alternatively, the actuator mechanism may be separate from the park brake pad carrier assembly, wherein the park brake pad carrier assembly allows a respective movement of the at least one park brake pad by carrying the at least one park brake pad and providing an interface for the actuator mechanism to actuate the at least one park brake pad.

In some embodiments, the at least one local displacement member is a bearing member arranged between one surface side of the at least one park brake pad opposed to the braking surface of the at least one park brake pad and the park brake pad carrier assembly.

Accordingly, the park brake pad may be supported with at least one degree of freedom in the park brake braking surface plane, preferably in the direction of the projection of the rotational direction substantially perpendicular to the rotational axis and perpendicular to the radial direction, by the bearing with a park brake carrier. The bearing member may be provided by at least one roller.

In some embodiments, the at least one local displacement member is a spring member arranged on a lateral surface side of the at least one park brake pad substantially in parallel to the axial direction and perpendicular to a projection of the rotational movement of the brake disc in parallel to the at least one park brake pad with a predetermined spring force acting in the direction of the projection of the rotational movement of the brake disc in parallel to the at least one park brake pad.

In some embodiments, the park brake assembly comprises at least two spring members, wherein at least one of the at least two spring members is arranged on the one lateral surface side and the at least one other of the at least two spring members is arranged on the other opposed lateral surface side.

For example, the first spring member as a compression spring member is arranged on the upstream lateral surface side with respect to the rotational direction and the second spring member as another compression spring member is arranged on the downstream lateral surface side. If the respective park brake pad is moved by the brake disc in the rotational direction upon contact before the brake disc is stopped, the first spring is elongated and the second spring is compressed. Upon release of the park brake pad from the brake disc, the park brake pad is re-centered by the spring members. Preferably, the first spring member and the second spring member are pre-compressed spring members, wherein one of the first or the second spring member is compressed even more while the other one relaxes a bit upon a respective movement of the brake disc in engagement with the park brake pad.

In some embodiments, the at least two spring members provide substantially equal spring forces in opposite directions.

As previously addressed, the two spring members with opposed force directions allow to support each other to return the park brake pad in a reference position according to the respective spring force balance. With substantially equal spring forces and preferably substantially equal spring length, the park brake pad may be easily centered.

In some embodiments, the park brake assembly comprises an overload clutch arranged on the surface side of the at least one park brake pad opposed to the braking surface of the at least one park brake pad.

The overload clutch may allow the park brake pad to retract from the brake disc when the braking torque gets too high, e.g. when one wheel of one axle gets a lot earlier in force transfer contact with the park brake assembly than the other park brake assemblies. In such event, the overload clutch allows the park brake pad form-fit portion to jump into the next section of the brake disc form-fit portion when the braking torque gets too high. By such jumping into the next section, a more even share of the overall braking torque between all the parking brake assemblies of a vehicle may be achieved. Otherwise, the park brake assembly which receives a form-fit force transfer from the park brake pad to the park brake carrier first would have to carry the brake force of the whole vehicle. This may overload the bearings and may destroy or at least damage the park brake. Preferably, an overload clutch could be positioned on the surface side of the park brake pad opposed to the park brake braking surface. e.g. within an actuator mechanism to actuate the park brake pad such as a piston or plunger. However, the overload clutch maybe also positioned somewhere else and may not have to be directly arranged on the surface side of the at least one park brake pad opposed to the braking surface of the at least one park brake pad. For example, the overload clutch may be directly or indirectly positioned between the park brake pad and a lever of lever mechanics as addressed in the following.

In a variant, the overload clutch function may be achieved by common lever mechanics of the actuator mechanism or by the axial spring member as it will be described below. For example, the overload clutch function may be achieved by simply pushing back an actuating piston of the actuator mechanism over the lever mechanism against a spring of the actuator mechanism.

In an exemplary embodiment the park brake pad form-fit portion and the brake disc portion are formed as serrations with respective teeth having a certain defined contact angle. On one hand, the contact angle prevents a self-locking because of friction so that the overload function is possible. On the other hand, the contact angle is big enough to reduce the required clamping force as much as possible. Accordingly, the force transfer with such geometry is a combination of the frictional pairing and form-fit.

In some embodiments, the park brake assembly comprises an axial spring member arranged on the surface side of the at least one park brake pad opposed to the braking surface of the at least one park brake pad with a predetermined axial spring force acting in the axial direction.

With respect to the axial spring member providing an overload clutch functionality the axial spring member may be compressed to provide a reverse clamping stroke, when the parking braking torque gets too high. The park brake pad gets pushed back in accordance with the form-fit contour, e.g. by the angle of the serrations.

Alternatively or in addition, the axial spring member may provide a preloaded clamping mechanism by the spring force of the axial spring member without the alignment of the previously described spring members. For example, the axial spring member may be directly connected to the actuator mechanism such as a piston or plunger but may also be positioned, for example between the park brake pad and a lever mechansim or within an axial spring member chamber to act on the surface side of the park brake pad opposed to the park brake braking surface. When the park brake pad form-fit portion does not align precisely to the brake disc form-fit portion at the time of actuation to apply a braking force, the brake disc is configured to slide relative to the park brake pad to the next section of the park brake pad form-fit portion, e.g. the next serration section, and the park brake pad form-fit portion may snap into the brake disc form-fit portion accordingly to transfer the clamping force.

In another aspect, the present invention relates to a brake assembly for a vehicle, comprising a brake disc rotatable about a rotational axis and comprising a brake disc form-fit portion, and the park brake assembly as previously described. The park brake pad form-fit portion of the at least one park brake pad is arranged opposed to the brake disc form-fit portion in at least one rotational position of the brake disc.

The park brake assembly may be integrated in a service brake assembly. Preferably, the park brake assembly is separated from the service brake assembly. Separating the park brake assembly from the service brake assembly, e.g. by a separate caliper, allows to provide a braking assembly having a reduced overall axial length while still delivering a sufficient braking force or clamping force, respectively. Thus, it is also possible to mount the parking brake assembly at the front axle of a vehicle.

In some embodiments, the brake disc form-fit portion is arranged in an outer or inner radial surface portion of the brake disc extending in the radial direction with respect to the rotational axis.

In a basic configuration, the brake disc comprises two opposed outer radial surfaces facing away from each other. However, the brake disc may also provide a groove or the like extending circumferentially between the outer radial surface sides of the brake disc at an outer or inner circumference such as a cooling channel. With respect to such groove or cooling channel, the brake disc further provides inner radial surface portions facing each other.

As per the above, such cooling channel may be provided as at least a groove extending circumferentially between the two radial surface sides of the brake disc facing away from each other. As an example, at least one outer cooling channel portion having an opening the radial direction facing away from rotational axis and/or at least one inner cooling channel portion having an opening in the radial direction facing toward the rotational axis may be formed in the brake disc. The at least one park brake pad provides a park brake braking surface at least partially extending the cooling channel, for example, the inner cooling channel portion to be moved toward a surface of the inner cooling channel extending radially with respect to the rotational axis upon an axial movement of the at least one park brake pad. In principle, the term "park brake pad" may not be limited to a flat body but may comprise any type of configuration to provide a respective park brake braking surface for a frictional pairing with the brake disc to apply a braking force. The axial movement of the park brake braking surface at least partially extending in the cooling channel may be actuated by a ball-ramp mechanism. Such ball-ramp mechanism may be configured to move one park brake braking surface toward an opposed radial surface side of the cooling channel. In a variant, the park brake assembly may comprise a brake pad with two opposed park brake braking surfaces, each of which being moved toward respectively opposed radial surfaces sides of the cooling channel. In other words, the opposed park brake braking surfaces are going to be spread apart from each other to simultaneous apply a braking force on the opposed radial surface sides of the cooling channel. In a further variant, the park brake assembly may provide two separate park brake pads, wherein the respective park brake braking surfaces are facing away from each other in the axial direction with respect to the rotational axis of the brake disc. The ball-ramp mechanism may be configured to spread the opposed park brake pads apart comparably to the configuration with two park brake braking surfaces on one park brake pad. The described actuation of the at least one park brake pad or park brake braking surface(s) is not limited to the actuation by a ball-ramp mechanism but may be also actuated by another electric, hydraulic or pneumatic mechanism, which may comprise any other actuators such as levers, control slides, pistons or the like. Since the engagement of the park brake braking surface and the brake disc is provided within the cooling channel of the brake disc, a so-called cold after hot effect is avoided or at least reduced.

In some embodiments, the brake assembly comprises the park brake assembly comprising the at least one park brake pad arranged to extend in a cooling channel of the brake disc and another park brake assembly.

The other park brake assembly may be a conventional park brake assembly integrated into the service brake assembly as known in the art. Alternatively, the other park brake assembly may be a park brake assembly as described according to the present invention.

Preferably, the park brake assembly arranged to extend in a cooling channel of the brake disc may thereby form an auxiliary park brake assembly to support the other park brake assembly or to be only activated under certain circumstances or in predetermined operating modes. For example, the park brake assembly arranged to extend in a cooling channel of the brake disc may be only activated in a standstill state of a vehicle comprising the respective brake assembly. By limiting such activation to a standstill state of the vehicle, wear of the respective at least one park brake pad may be avoided. Further, no dynamic torque effects may have to be considered.

In some embodiments, the brake assembly further comprises a service brake assembly comprising at least one service brake pad comprising a service brake braking surface as contact surface for the brake disc to apply the clamping force, and wherein the service brake braking surface of the at least one service brake pad is arranged at a radial position with respect to the rotational axis outside the brake disc form-fit portion.

Accordingly, the service brake pad does not interfere with the brake disc form-fit portion and is configured to act on another radial surface portion of the brake disc than the park brake pad.

In some embodiments, a radial park brake pad distance with respect to the rotational axis is less than a radial service brake pad distance with respect to the rotational axis, or wherein the radial park brake pad distance with respect to the rotational axis is more than the radial service brake pad distance with respect to the rotational axis.

The different radial distances of the park brake braking surface and the service brake braking surface with respect to the rotational axis of the brake disc result in different levers with respect to an achievable braking torque acting on the brake disc. Due to the different radial distances and therefore different levers, the park brake braking surface and the service brake braking surface may be subject to different braking torques when applying the same clamping force. In turn, different clamping forces may be required for the same braking torque. The respective radial distance with respect to rotational axis refers to the radial distance from the rotational axis to a mid-height of the respective braking surface in the radial direction with respect to the rotational axis. In concrete, the radial park brake pad distance is the radial distance from the rotational axis to a side of the park brake pad facing the rotational axis in the radial direction plus half of the radial distance between the side of the park brake facing the rotational axis in the radial direction and an opposed side of the park brake pad facing away from the rotational axis in the radial direction. Accordingly, the radial service brake pad distance is the radial distance from the rotational axis to a side of the service brake pad facing the rotational axis in the radial direction plus half of the radial distance between the side of the service brake facing the rotational axis in the radial direction and an opposed side of the service brake pad facing away from the rotational axis in the radial direction.

For example, an outer ring portion of the brake disc extending circumferentially around the rotational axis as park brake brake disc portion may be assigned to the park brake braking surface, whereas an inner, preferably adjacent, ring portion of the brake disc extending circumferentially around the rotational axis as service brake brake disc portion may be assigned to the service brake braking surface. Due to the increased friction radius of the park brake pad corresponding to the radial park brake pad distance, the required clamping force for a park brake function may be decreased to achieve the same brake torque in comparison to a smaller friction radius. This may allow the use of a stiffer caliper for the park brake assembly. In turn, the service brake assembly with the smaller friction radius of the service brake pad corresponding to the radial service brake pad distance may require an increased clamping force to achieve the same braking torque. However, this requirement may be easily accomplished by an appropriate service brake assembly design.

In turn, if the radial park brake pad distance is less than the radial service brake pad distance relative to the rotational axis, the reverse principle of the above is applicable. Specifically, the inner ring portion of the brake disc extending circumferentially around the rotational axis as park brake brake disc portion may be assigned to the park brake braking surface, whereas the outer, preferably adjacent, ring portion of the brake disc extending circumferentially around the rotational axis as service brake brake disc portion may be assigned to the service brake braking surface. Consequently, the requirement of a comparably higher clamping force may apply for the park brake assembly due to the smaller friction radius. However, this potential requirement may be at least to some extent compensated by providing a frictional pairing with respect to the park brake brake disc portion and the park brake braking surface, as described later. In turn, this configuration allows the service brake assembly to be operated with a clamping force comparably lower for the same braking torque.

In some embodiments, the brake disc form-fit portion and the park brake pad form-fit portion are configured as corresponding serration portions.

The serrations are an example to provide a positive and negative contour for a form-fit connection. The serrations may provide an equivalent spacing of teeth with defined contact angles. On the one hand, the contact angle prevents a self-locking because of friction so that the overload function is possible. On the other hand, the contact angle is big enough to reduce the required clamping force as much as possible. Accordingly, the force transfer with such geometry is a combination of the frictional pairing and form-fit.

In some embodiments, the brake disc form-fit portion and/or the park brake pad form-fit portion are/is releasable attachable to the brake disc or the at least one park brake pad, respectively.

For example, the brake disc form fit portion may be provided by a separate brake disc form-fit portion mounted to the park brake brake disc portion, e.g. as additional ring member. This may enhance the flexibility in the selection of materials and/or shapes, and may reduce cost by limiting the use of expensive and/or wear-sensitive materials to respective portions. The brake disc form-fit portion and/or the park brake pad form-fit portion as separate members to be mounted on the brake disc body or park brake pad, respectively, may be made of stainless steel to reduce corrosion effects, while reducing costs by not providing the whole brake disc or park brake pad, respectively, out of stainless steel.

In some embodiments, the braking surface of the at least one park brake pad and/or a respective park brake contact surface portion of the brake disc are/is configured to provide the frictional pairing of the at least one park brake pad and the brake disc with a friction coefficient different from, preferably higher as, a friction coefficient by the frictional pairing of the service brake braking surface of the at least one service brake pad with a respective service brake contact surface portion of the brake disc.

Specifically, the brake disc comprises a park brake brake disc portion facing the park brake braking surface of the at least one park brake pad in at least one rotational position of the brake disc, and a service brake brake disc portion facing the service brake braking surface of the at least one service brake pad in the at least one or in at least one other rotational position of the brake disc, and wherein a frictional pairing of the park brake brake disc portion and the park brake braking surface of the at least one park brake pad is configured to provide a friction coefficient different from the friction coefficient of a frictional pairing of the service brake brake disc portion and the service brake braking surface of the at least one service brake pad.

The different frictional pairings or friction coefficients, respectively, may be provided by different materials or respective coatings of the park brake brake disc portion and the service brake brake portion of the brake disc. For example, the park brake brake disc portion may be provided by the brake disc main body made from a single cast brake disc, e.g. a cast iron disc, whereas the service brake brake disc portion is provided by separate service brake brake portion of a different material mounted on the brake disc main body or by a coating or the like. Alternative or in addition, the park brake braking surface may be made of or may comprise a material different from the material of the service brake braking surface. In principle, the park brake brake disc portion and/or the service brake brake disc portion may be mounted on the brake disc main body as friction ring portions, which may, alternative or in addition to the provision of different frictional pairings, provide form-fit portions as described later. The park brake brake disc portion and/or the service brake brake disc portion as separate members to be mounted on the brake disc body may be made of stainless steel to reduce corrosion effects, while reducing costs by not providing the whole brake disc out of stainless steel. The park brake brake disc portion and/or the service brake brake disc portion may also be annular segments coaxially arranged to form the brake disc. The brake disc may provide park brake brake disc portion and/or the service brake brake disc portion on each outer radial surface side in parallel to one another and/or concentrically with respect to the rotational axis.

Besides the use of different materials for the park brake brake disc portion, the service brake brake disc portion, the park brake braking surface and/or the service brake braking surface, the respective portions or surfaces may, alternatively or in addition, provide different surface properties to provide the respective different frictional pairings.

Accordingly, in a configuration with the radial park brake pad distance being less than the radial service brake pad distance as per the above, the frictional pairing of the park brake braking surface and the park brake brake disc portion may be configured to provide a higher friction coefficient than the frictional pairing of the service brake braking surface and the service brake brake disc portion, or at least a friction coefficient higher than 0.3, preferably 0.45. Accordingly, the required clamping force, respectively, of the park brake assembly may be decreased. Further, besides the at least partial compensation of comparably higher clamping forces required in the configuration of the radial park brake pad distance being less than the radial service brake pad distance, the possible reduction of the clamping force with respect to the park brake assembly takes also effect on the configuration with the radial park brake pad distance being more than the radial service brake pad distance. In such configuration the required clamping force for the same braking torque may be further reduced to, for example, allow a more compact design.

Preferably, the friction coefficient of the frictional pairing of the park brake braking surface of the at least one park brake pad and the brake disc is at least 0.55.

For example, rubber materials may be used for the park brake pad to achieve the friction coefficient of more than 0.55, preferably more than 0.6. As already indicated before, the friction coefficient may be in principle be affected by coatings, machining, and/or connection of respective material and/or machined parts.

In another aspect, the present invention relates to a vehicle comprising a brake assembly as previously described. Preferably, the vehicle is configured as a commercial vehicle, a truck, a trailer, a bus and/or as a combination of a towing vehicle and a trailer. Alternatively or in addition, the vehicle preferably comprises a pure electric, a hybrid or a conventional powertrain.

Commercial vehicles are particularly associated with comparably larger and heavier components. Accordingly, the use of the brake assembly as previously described for commercial vehicles allows to enhance compactness and design flexibility. Further, in the event of electrically powered or hybrid vehicles, the installation space for a brake assembly may be further reduced. The use of the previously described park brake assembly or brake assembly may therefore contribute to a reduction in installation space requirements or may allow a more flexible distribution of the respective components within the available space.

Further advantages, aspects and details of the invention are subject to the claims, the following description of exemplary embodiments applying the principles of the invention, and the respective exemplary drawings.
**Figure 1** is a lateral view of a brake assembly according to an exemplary first embodiment to which the present invention is applicable;
**Figure 2** is a cross-sectional view of a park brake assembly section of the brake assembly according to Figure 1;
**Figure 3** is a lateral view of a brake disc according to an exemplary embodiment;
**Figure 4** is a cross-sectional view of a section of the brake assembly comprising the brake disc according to Figure 3;
**Figure 5** is a lateral view of a brake assembly according to an exemplary second embodiment to which the present invention is applicable;
**Figure 6** is a cross-sectional view of a section of the brake assembly according to Figure 5;
**Figure 7** is a cross-sectional view of a section of a brake assembly according to a third embodiment to which the present invention is applicable;
**Figure 8** is a cross-sectional view of a section of a brake assembly according to a fourth embodiment to which the present invention is applicable;
**Figure 9** is a top view of a brake assembly according to Figure 1 comprising a first exemplary embodiment of the park brake assembly;
**Figures 10a to 10e** are schemes of operation for the engagement of the park brake pad form-fit portion of the park brake pad into the brake disc form-fit portion of the brake disc according to the brake assembly shown in Figure 1 in a comparably advantageous scenario; and
**Figures 11a to 11e** are schemes of operation for the engagement of the park brake pad form-fit portion of the park brake pad into the brake disc form-fit portion of the brake disc according to the brake assembly shown in Figure 1 in a comparably disadvantageous scenario.
**Figures 12a to 12d** are schemes of operation for the engagement of a park brake pad form-fit portion of a park brake pad into a brake disc form-fit portion of a brake disc using a clutch; and
**Figures 13a to 13c** are schemes of operation for the engagement of a park brake pad form-fit portion of a park brake pad into a brake disc form-fit portion of a brake disc using an axial spring member.

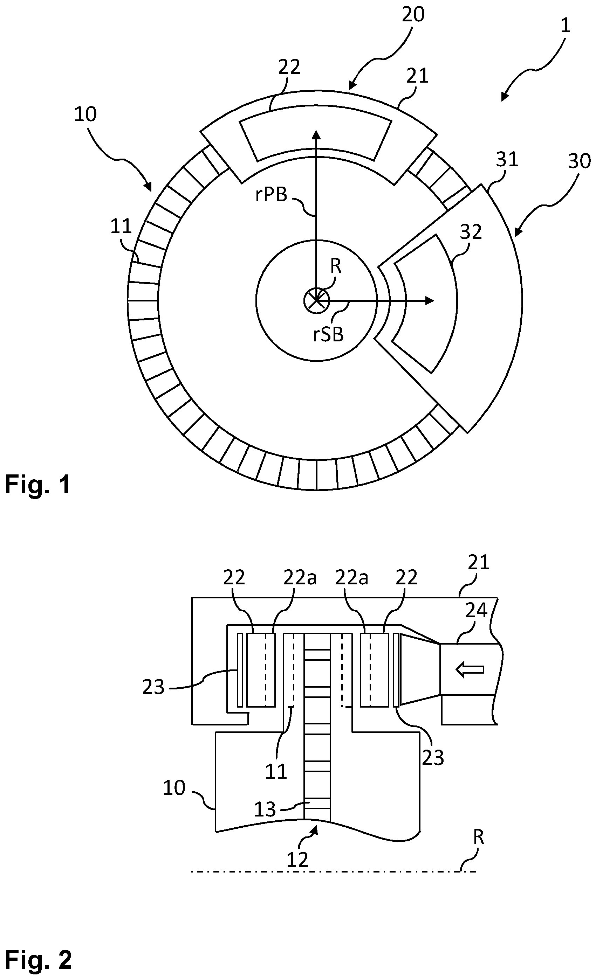

**Figure 1** shows a lateral view of a brake assembly 1 according to a first exemplary embodiment. The brake assembly 1 comprises a brake disc 10 rotatable about a rotational axis R. Here, the lateral view corresponds to a view in the direction of the rotational axis R on a radial surface side of the brake disc with respect to the rotational axis R. The brake assembly 1 further comprises a park brake assembly 20 comprising a park brake caliper 21 as a park brake pad carrier assembly to carry a park brake pad 22. In the exemplary embodiment, the park brake caliper 21 is a floating caliper further carrying another park brake pad (not shown) on an opposed radial surface side of the brake disc 10. However, in other embodiments, the park brake caliper 21 may be a fixed caliper or may be a park brake pad carrier assembly for only one or more than two park brake pads. The brake assembly 1 also comprises a service brake assembly 30 comprising a service brake caliper 31 as a service brake pad carrier assembly to carry a service brake pad 32. Similar to the park brake caliper 21, the service brake caliper 31 is a floating caliper with another service brake pad arranged on the opposed radial surface side of the brake disc 10 (not shown) in the exemplary embodiment. In alternative embodiments, the service brake caliper may also be a fixed caliper or may be a service brake pad carrier assembly for only one or more than two service brake pads. Each of the park brake caliper 21 and service brake caliper 31 comprises or may be operatively connected to an actuator mechanism to move the respective park brake pad 22 or the service brake pad 32, respectively, each of which being axially movable supported in the park brake caliper 21 or service brake caliper 31, respectively, in the axial direction with respect to the rotational axis R toward the brake disc 10 to apply a clamping force upon contact.

In the exemplary embodiment, the park brake pad 22 is arranged in a radial park brake pad distance rPB, which is the distance of the rotational axis R to the mid-height of the park brake pad 22 in the radial direction. Further, the service brake pad 32 is arranged in a radial service brake pad distance rSB, which is the distance of the rotational axis R to the mid-height of the service brake pad 32 in the radial direction. Here, the radial park brake pad distance rPB is more than the radial service brake pad distance rSB. Specifically, the park brake pad 22 and the service brake pad 32 are configured and arranged such that each of the park brake pad 22 and the service brake pad 32 act on different circumferential brake disc portions without overlap. In other words, the park brake pad 22 and the service brake pad 32 are configured and arranged such that an outer radial distance of the service brake pad 32 is less than an inner radial distance of the park brake pad 22. In alternative embodiments, the park brake pad 22 and the service brake pad 32 may provide some overlap in terms of being configured and arranged to partially act on the same circumferential brake disc portion.

Since the radial park brake pad distance rPB is more than the radial service brake pad distance rSB, the radial park brake pad distance rPB as lever or lever arm vector with respect to the rotational axis R and a respective torque requires a smaller clamping force for the park brake pad 22 to achieve the same braking torque with respect to the service brake pad 32 arranged in a radial service brake pad distance rSB as lever with respect to a torque around the rotational axis R less than the radial park brake pad distance rPB. In the exemplary embodiment, but not necessarily, the brake disc 10 comprises a park brake brake disc portion 10a as an outer annular portion extending circumferentially around the rotational axis R for a frictional pairing with the park brake pad 22 and a service brake brake disc portion 10b as an inner annular portion extending circumferentially around the rotational axis R for a frictional pairing with the service brake pad 32, wherein the friction coefficient of the service brake brake disc portion 10b is higher than the friction coefficient of the park brake brake portion 10a to at least partially compensate the smaller lever due to the radial service brake pad distance rSB to reduce the required clamping force. However, in alternative embodiments, the friction coefficient of the park brake brake disc portion 10a is higher than the friction coefficient of the service brake brake portion 10b to further decrease the required clamping force. Further, the brake disc 10 comprises a brake disc form-fit portion 11 as an annular portion extending circumferentially around the rotational axis R to provide a form-fit connection with a corresponding park brake pad form-fit portion 22a (Figure 2) to further support the previously described friction-based park braking function. In the exemplary embodiment, the brake disc form-fit portion 11 is formed by serrations with equally distanced teeth in the circumferential direction.

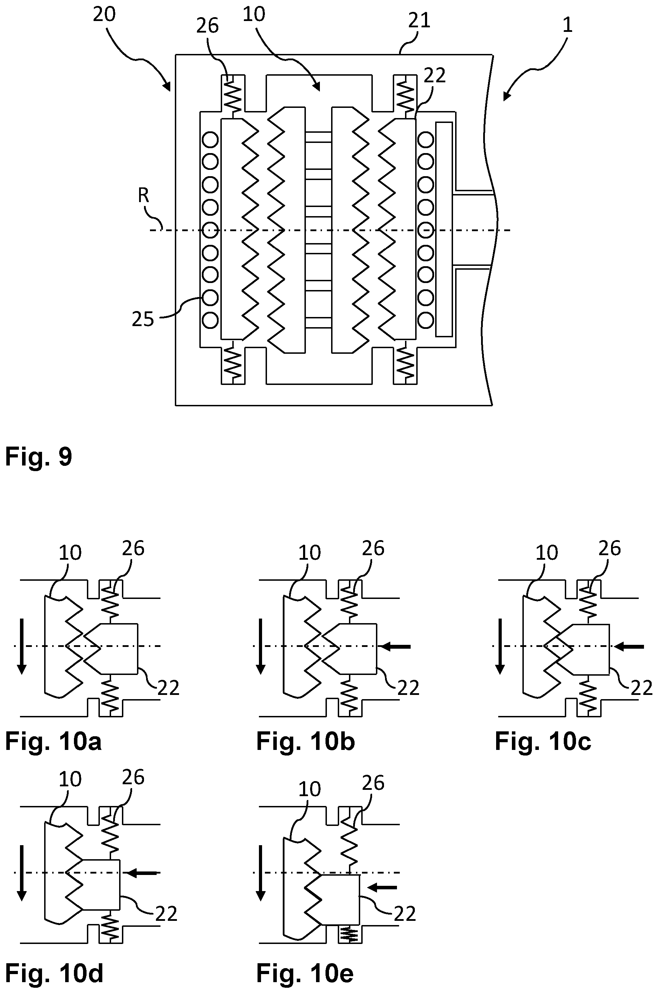

**Figure 2** shows a cross-sectional view of a park brake assembly section of the brake assembly 1 according to Figure 1. The park brake assembly comprises the park brake caliper 21 accommodating an actuator 24 movable in the axial direction with respect to the rotational axis R to move the park brake pads 22, each of which is arranged on an opposed radial surface side of the brake disc 10 toward the brake disc 10. The one park brake pad 22 arranged between the one radial surface side of the brake disc 10 and the actuator 24 is directly actuated by the actuator 24, whereas the other park brake pad 22 is indirectly actuated due to the park brake caliper 21 configured as floating caliper. In the exemplary embodiment, a transfer member 23 is arranged on each surface side of the respective park brake pads 22 facing away from the brake disc 10 in the axial direction. In the exemplary embodiment, the transfer members 23 represent the bearing members 25 or rollers, respectively, which will be described in more detail with respect to Figure 9. However, in other embodiments, the transfer members 23 may comprise other functionalities to actuate, support and/or guide the park brake pads 22. Each of the park brake pads 22 comprises the park brake pad form-fit portion 22a, each of which facing toward a corresponding brake disc form-fit portion 11 on each outer radial surface side of the brake disc 10. The brake disc 10 further comprises a cooling channel 12 which is formed by a distance between two outer portions of the brake disc 10 extending radially and connected by a plurality of connecting members 13. In the exemplary embodiment, the connecting members 13 form an integral part of the brake disc 10.

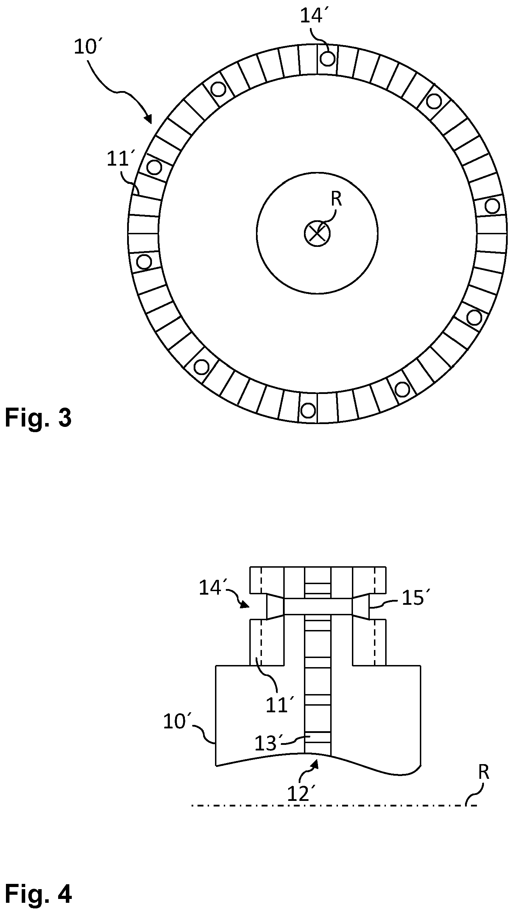

**Figure 3** shows a lateral view of a brake disc 10' according to an exemplary embodiment. In this variant, the brake disc 10' comprises several mounting holes 14' to mount a brake disc form-fit portion as separate annular member on the brake disc 10'.

**Figure 4** shows a cross-sectional view of a section of the brake disc 10' according to Figure 3. The reference signs denote the same features as in Figure 2 but indicated by " ' ". Accordingly, a detailed description of the common features is omitted. In accordance with the description of Figure 3, the shown embodiment of the brake disc 10' in Figure 4 differs from the embodiment of the brake disc 10 in Figure 2 in that the brake disc form-fit portion 11' is mounted on the brake disc 10', here, by mounting members 15' such as screws, bolts, rivets or the like.

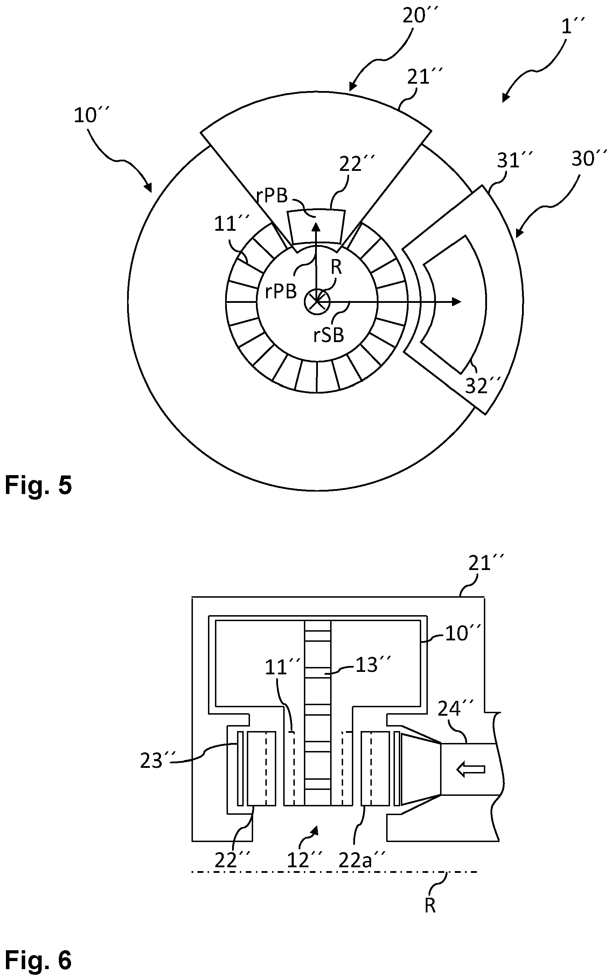

**Figure 5** is a lateral view of a brake assembly 1" according to an exemplary second embodiment to which the present invention is applicable. The reference signs denote the same features as in the second embodiment but indicated by " " ". Accordingly, a detailed description of the common features is omitted. The second embodiment differs from the first embodiment in the arrangement and configuration of the park brake pad 22" and the service brake pad 32". Here, the park brake pad is arranged in a radial park brake pad distance rPB less than the radial service brake pad distance rSB. Accordingly, the clamping force for the park brake pad 22" to achieve the same braking torque than the service brake pad 32" needs to be higher. Accordingly, the brake disc form-fit portion 11" as an annular portion extending circumferentially around the rotational axis R to provide a form-fit connection with a corresponding park brake pad form-fit portion 22a" (Figure 6) is arranged at an inner circumference of the brake disc 10".

**Figure 6** is a cross-sectional view of a park brake assembly section of the brake assembly 1" according to Figure 5. The park brake assembly in Figure 6 differs from the park brake assembly shown in Figure 2 by the form-fit pairing of the brake disc 10" and the park brake pad 22" being provided at an inner annular portion of the brake disc 10".

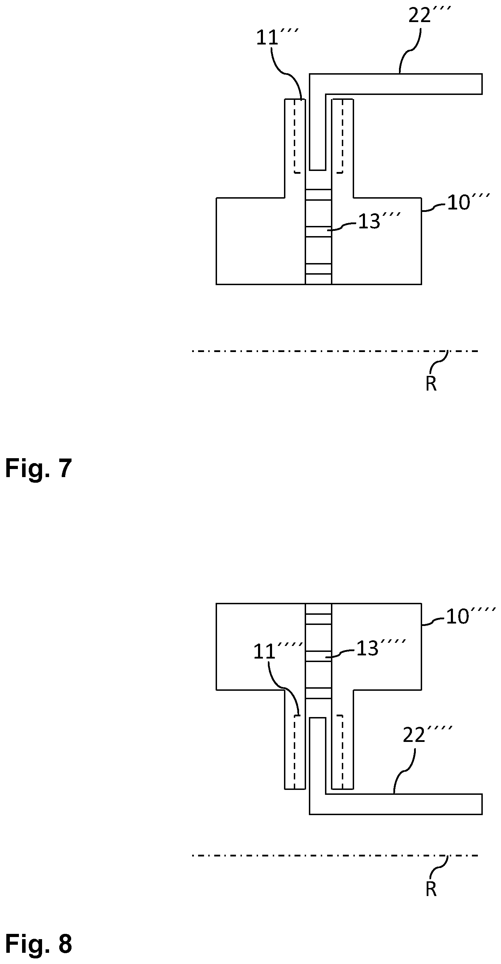

**Figure 7** shows a cross-sectional view of a section of a brake assembly according to a third embodiment to which the present invention is applicable. Here, the park brake pad 22‴ partially extends in the cooling channel from an outer circumference of the brake disc 10‴. The park brake pad 22‴ is axially movable with respect to the rotational axis to contact an inner radial surface side of the cooling channel, which, in the exemplary embodiment further comprises a brake disc form-fit portion 11‴ corresponding to a park brake pad form-fit portion (not shown). However, in other embodiments, the park brake pad 22‴ and the brake disc 10‴ may only provide a frictional pairing. The park brake pad 22‴ is moveable to only one inner radial surface side of the brake disc 10‴ for applying a clamping force. However, in other embodiments, the park brake pad 22‴ may also be actuated to apply a clamping force on either the one or the other inner radial surface side of the brake disc 10‴. In further embodiments, the park brake pad 22‴ may comprise two park brake braking surfaces to be spread apart in the axial direction to simultaneously apply a clamping force on both inner radial surface sides of the brake disc 10‴, which may also be accomplished by two separate park brake pads 22‴ both extending in the cooling channel.

**Figure 8** shows a cross-sectional view of a section of a brake assembly according to a fourth embodiment to which the present invention is applicable. The reference signs denote the same features as in Figure 7 but indicated by " "" ". Accordingly, a detailed description of the common features is omitted. The fourth embodiment differs from the third embodiment in that the park brake pad 22"" extends in the cooling channel from an inner circumference of the brake disc 10"". The same principles as described above for the fifth embodiment also apply for the sixth embodiment with respect to actuation of the park brake pad 22"" to apply a clamping force on the brake disc 10"".

**Figure 9** shows a top view of a brake assembly according to Figure 1 comprising a first exemplary embodiment of the park brake assembly 20. Since the park brake pad form-fit portion 22a (Figure 2) of the park brake pad 22 may not be precisely aligned with the brake disc form-fit portion 11 (Figure 2), the park brake caliper 21 comprises bearing members 25 disposed on a surface side of the park brake pad 22 facing away from the radial surface sides of the brake disc 10 and supported by the park brake caliper 21. Further, the park brake caliper 21 comprises a spring member 26 on each lateral side of each of the park brake pads 22 to provide a resilient connection of the park brake pads 22 with the park brake caliper 21 in a projection direction of the rotational movement of the brake disc 10 perpendicular to the rotational axis R and perpendicular to the radial direction with respect to the rotational axis R. The spring members 26 are each partially accommodated in a recess of the park brake caliper 21, the open end of which also partially functions as an abutment for the respective park brake pad 22 to limit a moving ability in the projection direction. The spring members 26 are configured and arranged to center the respective park brake pad 22 in the middle position within the park brake caliper 21 in the projection direction, when the parking brake pad 22 is not actuated, so as to provide the park brake pad form-fit portion with sufficient available travel to align with the brake disc form-fit portion.

**Figures 10a to 10e** show schemes of operation for the engagement of the park brake pad form-fit portion of the park brake pad into the brake disc form-fit portion of the brake disc according to the brake assembly shown in Figure 1 in a comparably advantageous scenario. In principle, the spring members 26 and bearing member 25 allow the parking brake pads 22 to get substantially immediately in contact with the brake disc 10 when the park brake assembly is actuated accordingly. However, for a transfer of the clamping forces, the brake disc 10 may slightly have to turn to overcome the clearance between the park brake pads 22 and the park brake caliper 21, which results in an "unbraked travel". In an advantageous scenario, the park brake pad 22 according to Figure 10a without being actuated is centered by the spring members 26. Upon actuating, as indicated by the arrow directed in the axial direction, the park brake pad 22 is moved toward the brake disc 10 in the axial direction with respect to the rotational axis R (Figure 10b). Figure 10c shows the initial contact of the park brake pad form-fit portion with the brake disc form-fit portion. The park brake pad form-fit portion fully engages the brake disc form-fit portion while the brake disc 10 further rotates, which causes the park brake pad 22 to move in the projection direction of the rotational movement, indicated by the vertical arrow (Figure 10d). Accordingly, the spring member 26 upstream in the projection direction is extended while the spring member 26 downstream in the projection direction is compressed. The unbraked travel of the brake disc 10 stops when the park brake pad 22 abuts at the park brake caliper 21 or when the clearance between the park brake pad 22 and the park brake caliper 21 in the projection direction is closed, respectively.

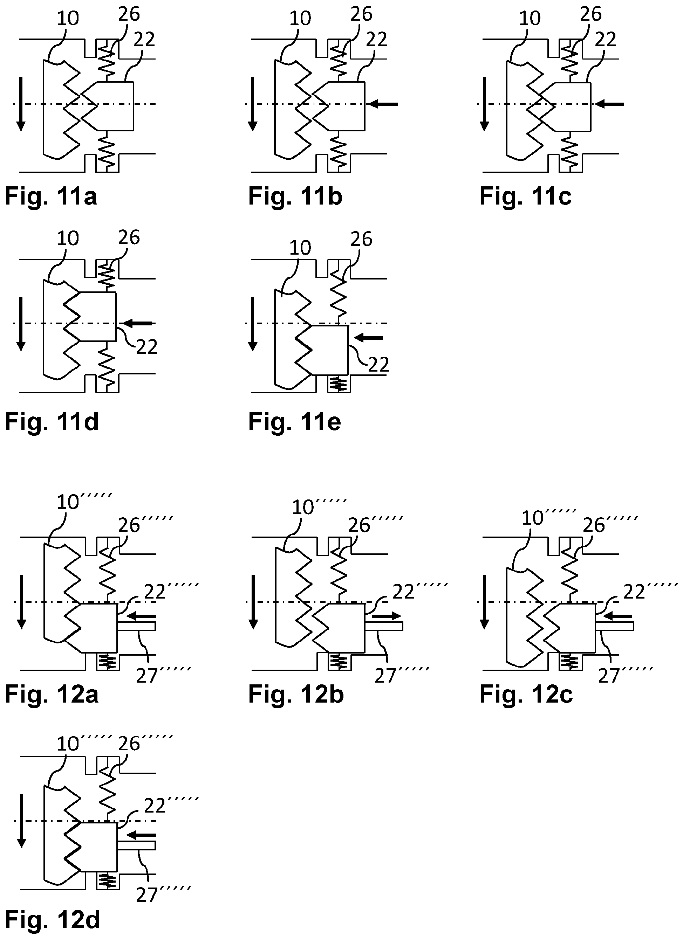

**Figures 11a to 11e** show schemes of operation for the engagement of the park brake pad form-fit portion of the park brake pad into the brake disc form-fit portion of the brake disc according to the brake assembly shown in Figure 1 in a comparably disadvantageous scenario. Figures 11a and 11b substantially correspond to Figures 10a and 10b, a description of which is therefore omitted. As per Figure 12c, the initial contact of the park brake pad 22 with the brake disc 10 urges the park brake pad form-fit portion to engage the brake disc form-fit portion at a serration upstream of the brake disc form-fit portion with respect to the rotation direction or projection direction, respectively. Accordingly, the park brake pad 22 is first moved slightly upstream before it is moved in the final abutment with the park brake caliper 21, as illustrated by Figures 11d and 11e. Consequently, the unbraked travel of the brake disc 10 is longer than in the more advantageous scenario. Accordingly, the clearance between the park brake pad 22 and the park brake caliper 21 is configured to keep the unbraked travel of the brake disc 10 at a predetermined maximum for such unbraked in any event.

**Figures 12a to 12d** show schemes of operation for the engagement of a park brake pad form-fit portion of a park brake pad into a brake disc form-fit portion of a brake disc using an overload clutch. The configuration of the respective park brake assembly corresponds to the ones of Figures 10a-e and 11a-e besides the additional overload clutch 27‴". Figure 12a illustrates a position of the park brake pad 22‴" as per Figure 10e or Figure 11e, respectively. If the braking torque becomes too high, i.e. exceeds a predetermined torque threshold, the overload clutch 27‴" allows the park brake pad 22‴" to move away from the brake disc 10‴ʺ, as shown in Figure 12b. According to Figure 12c, with the braking torque being released from the park brake pad 22‴ʺ, the park brake pad 22‴ʺ is moved back toward the brake disc 10‴ʺ and returns to the clamping state as per Figure 12d.

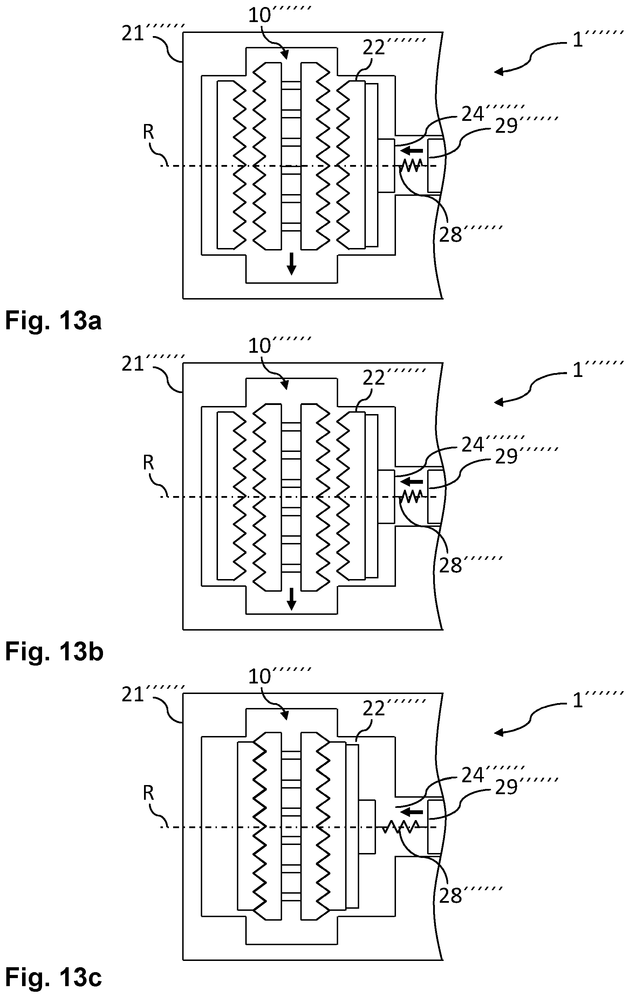

**Figures 13a to 13c** show schemes of operation for the engagement of a park brake pad form-fit portion of a park brake pad into a brake disc form-fit portion of a brake disc 10‴‴ using an axial spring member 28‴‴. The axial spring member is arranged between the actuator 24‴‴ and an axial spring member support 29‴‴ to preload the actuator 24‴‴ in the axial direction with respect to the rotational axis R. In the event that the park brake pad form-fit portion does not precisely align with the brake disc form-fit portion upon actuation of the park brake pad 22‴‴ to engage the brake disc 10‴‴, the brake disc 10‴‴ slides relative to the park brake pad to the next section of the park brake pad form-fit portion, e.g. the next serration section, and the park brake pad form-fit portion may snap into the brake disc form-fit portion accordingly to transfer the clamping force. The axial spring member 28‴‴ thereby allows the same overload clutch function as the overload clutch 27‴ʺ as previously described.

The invention has been described with respect to exemplary embodiments. However, the invention is not limited to the exemplary embodiments.

### LIST OF REFERENCE SIGNS

- 1, 1", 1‴‴: brake assembly
- 10, 10', ..., 10‴‴: brake disc
- 11, 11', ..., 11"": brake disc form-fit portion
- 12, 12', 12",: cooling channel
- 13, 13', 13", 13"', 13"",: connecting portion
- 14': mounting hole
- 15': mounting member
- 20, 20', 20": park brake assembly
- 21, 21', ..., 21‴ʺʺ: park brake caliper (park brake pad carrier assembly)
- 22, 22', ..., 22‴‴: park brake pad
- 22a, 22a": park brake pad form-fit portion
- 23, 23": transfer member
- 24, 24", 24‴‴: actuator
- 25: bearing member (local displacement member)
- 26, 26‴ʺ: radial spring member (local displacement member)
- 27‴ʺ: overload clutch
- 28‴‴: axial spring member
- 29‴‴: axial spring member support
- 30, 30": service brake assembly
- 31, 31": service brake caliper (service brake pad carrier assembly)
- 32, 32": service brake pad
- R: rotational axis
- rPB: radial park brake pad distance
- rSB: radial service brake distance

## Claims

1. Park brake assembly (20, 20', 20") for a vehicle, comprising:
at least one park brake pad (22, 22', ..., 22‴‴) configured to apply a clamping force on a brake disc (10, 10', ..., 10‴‴) rotatable about a rotational axis (R),
wherein the at least one park brake pad (22, 22', ..., 22""") comprises a braking surface as contact surface for the brake disc (10, 10', ..., 10‴‴) to apply the clamping force, and
a park brake pad carrier assembly (21, 21', ..., 21‴‴) carrying the at least one park brake pad (22, 22', ..., 22""") and configured to move the at least one park brake pad (22, 22', ..., 22""") toward the brake disc (10, 10', ..., 10‴‴) in an axial direction substantially perpendicular to the braking surface of the at least one park brake pad (22, 22', ..., 22""") or to allow a respective movement of the at least one park brake pad (22, 22', ..., 22‴‴),
wherein the braking surface of at least one park brake pad (22, 22', ..., 22""") at least partially forms a park brake pad form-fit portion (22a, 22a") in correspondence to a brake disc form-fit portion (11, 11', ..., 11"") of the brake disc (10, 10', ..., 10‴‴) for a braking pairing, **characterized in that**
the park brake assembly (20, 20', 20") comprises at least one local displacement member (25, 26, 26‴ʺ) arranged between the at least one park brake pad (22, 22', ..., 22‴‴) and the park brake pad carrier assembly (21, 21', ..., 21‴‴) configured to allow a relative displacement of the at least one park brake pad (22, 22', ..., 22""") with respect to the park brake pad carrier assembly (21, 21', ..., 21 """) in a direction within the braking surface plane.

2. Park brake assembly (20) according to claim 1, wherein the at least one local displacement member (25) is a bearing member (25) arranged between one surface side of the at least one park brake pad (22) opposed to the braking surface of the at least one park brake pad (22) and the park brake pad carrier assembly (21).

3. Park brake assembly (20, 20', 20") according to claim 1 or 2, wherein the at least one local displacement member (26, 26""') is a spring member (26, 26""') arranged on a lateral surface side of the at least one park brake pad (22, 22', ..., 22‴‴) substantially in parallel to the axial direction and perpendicular to a projection of the rotational movement of the brake disc (10, 10', ..., 10‴ʺ) in parallel to the at least one park brake pad (22, 22', ..., 22‴ʺ) with a predetermined spring force acting in the direction of the projection of the rotational movement of the brake disc (10, 10', ..., 10‴ʺ) in parallel to the at least one park brake pad (22, 22', ..., 22‴ʺ).

4. Park brake assembly (20, 20', 20") according to claim 3, wherein the park brake assembly (20, 20', 20") comprises at least two spring members (26, 26‴ʺ), wherein at least one of the at least two spring members (26, 26‴ʺ) is arranged on the one lateral surface side and the at least one other of the at least two spring members (26, 26‴ʺ) is arranged on the other opposed lateral surface side.

5. Park brake assembly (20, 20', 20") according to claim 4, wherein the at least two spring members (26, 26‴ʺ) provide substantially equal spring forces in opposite directions.

6. Park brake assembly (20, 20', 20") according to any one of the preceding claims, wherein the park brake assembly (20, 20', 20") comprises an overload clutch (27‴ʺ) arranged on the surface side of the at least one park brake pad (22"") opposed to the braking surface of the at least one park brake pad (22ʺʺ).

7. Park brake assembly (20, 20', 20") according to any one of the preceding claims, wherein the park brake assembly (20, 20', 20") comprises an axial spring member (28‴‴) arranged on the surface side of the at least one park brake pad (22‴‴) opposed to the braking surface of the at least one park brake pad (22‴‴) with a predetermined axial spring force acting in the axial direction.

8. Brake assembly (1, 1", 1‴‴) for a vehicle, comprising:
a brake disc (10, 10', ..., 10‴‴) rotatable about a rotational axis (R) and comprising a brake disc form-fit portion (11, 11', ..., 11""), and
the park brake assembly (20, 20', 20") according to any one of the claims 1 to 7,
wherein the park brake pad form-fit portion (22a, 22a") of the at least one park brake pad (22, 22', ..., 22""") is arranged opposed to the brake disc form-fit portion (11, 11', ..., 11ʺʺ) in at least one rotational position of the brake disc (10, 10', ..., 10‴‴).

9. Brake assembly (1, 1", 1‴‴) according to claim 8, wherein the brake disc form-fit portion (11, 11', ..., 11"") is arranged in an outer or inner radial surface portion of the brake disc (10, 10', ..., 10""") extending in the radial direction with respect to the rotational axis (R).

10. Brake assembly (1, 1", 1‴‴) according to claim 8 or 9, wherein the brake assembly (1, 1", 1‴‴) further comprises a service brake assembly (30, 30") comprising at least one service brake pad (32, 32") comprising a service brake braking surface as contact surface for the brake disc (10, 10', ..., 10‴‴) to apply the clamping force, and wherein the service brake braking surface of the at least one service brake pad (32, 32") is arranged at a radial position with respect to the rotational axis (R) outside the brake disc form-fit portion (11, 11', ..., 11ʺʺ).

11. Brake assembly (1) according to claim 10, wherein a radial park brake pad distance (rPB) with respect to the rotational axis (R) is less than a radial service brake pad distance (rSB) with respect to the rotational axis (R), or wherein the radial park brake pad distance (rPB) with respect to the rotational axis (R) is more than the radial service brake pad distance (rSB) with respect to the rotational axis (R).

12. Brake assembly (1, 1", 1‴‴) according to any one of the claims 8 to 11, wherein the brake disc form-fit portion (11, 11', ..., 11ʺʺ) and the park brake pad form-fit portion (22a, 22a") are configured as corresponding serration portions.

13. Brake assembly (1, 1", 1‴‴) according to any one of the claims 8 to 12, wherein the brake disc form-fit portion (11') and/or the park brake pad form-fit portion (22a, 22a") are/is releasable attachable to the brake disc (10') or the at least one park brake pad (22, 22', ..., 22‴‴), respectively.

14. Brake assembly (1, 1", 1‴‴) according to any one of the claims 10 or 11 to 13, insofar as they are dependent on claim 10, wherein the braking surface of the at least one park brake pad (22, 22', ..., 22""") and/or a respective park brake contact surface portion of the brake disc (10, 10', ..., 10‴‴) are/is configured to provide the frictional pairing of the at least one park brake pad (22, 22', ..., 22‴‴) and the brake disc (10, 10', ..., 10‴‴) with a friction coefficient different from, preferably higher as, a friction coefficient by the frictional pairing of the service brake braking surface of the at least one service brake pad (32, 32") with a respective service brake contact surface portion of the brake disc (10, 10', ..., 10‴‴).

15. Vehicle comprising a brake assembly (1, 1", 1‴‴) according to one of the claims 8 to 14,
wherein the vehicle is preferably configured as a commercial vehicle, a truck, a trailer, a bus and/or as a combination of a towing vehicle and a trailer, and/or
wherein the vehicle preferably comprises a pure electric, a hybrid or a conventional powertrain.

## Patentansprüche

1. Feststellbremsanordnung (20, 20', 20") für ein Fahrzeug, umfassend:
zumindest einen Feststellbremsbelag (22, 22', ..., 22"""), welcher dazu konfiguriert ist, eine Klemmkraft auf eine um eine Drehachse (R) drehbare Bremsscheibe (10, 10', ..., 10‴‴) auszuüben, wobei der zumindest eine Feststellbremsbelag (22, 22', ..., 22""") eine Bremsfläche als Kontaktfläche für die Bremsscheibe (10, 10', ..., 10""") zur Ausübung der Klemmkraft umfasst, und
eine Feststellbremsbelagträgeranordnung (21, 21', ..., 21‴‴), welche den zumindest einen Feststellbremsbelag (22, 22', ..., 22‴‴) trägt und dazu konfiguriert ist, den zumindest einen Feststellbremsbelag (22, 22', ..., 22‴‴) in einer Axialrichtung, im Wesentlichen senkrecht zu der Bremsfläche des zumindest einen Feststellbremsbelags (22, 22', ..., 22"""), in Richtung der Bremsscheibe (10, 10', ..., 10‴‴) zu bewegen oder eine entsprechende Bewegung des zumindest einen Feststellbremsbelags (22, 22', ..., 22‴‴) zu ermöglichen.
wobei die Bremsfläche zumindest eines Feststellbremsbelags (22, 22', ..., 22‴‴) zumindest teilweise einen formschlüssigen Abschnitt der Feststellbremse (22a, 22a") bildet, welcher einem formschlüssigen Abschnitt der Bremsscheibe (11, 11', ..., 11"") der Bremsscheibe (10, 10', ..., 10""") für eine Bremspaarung entspricht, **dadurch gekennzeichnet, dass**
die Feststellbremsanordnung (20, 20', 20") zumindest ein lokales Verschiebungselement (25, 26, 26"") umfasst, welches zwischen dem zumindest einen Feststellbremsbelag (22, 22', ..., 22‴‴) und der Feststellbremsbelagträgeranordnung (21, 21', ..., 21""") angeordnet ist und dazu konfiguriert ist, relative Verschiebung des zumindest einen Feststellbremsbelags (22, 22', ..., 22‴‴) in Bezug auf die Feststellbremsbelagträgeranordnung (21, 21', ..., 21‴‴) in einer Richtung innerhalb der Bremsflächenebene zu ermöglichen.

2. Feststellbremsanordnung (20) nach Anspruch 1, wobei das zumindest eine lokale Verschiebungselement (25) ein Lagerelement (25) ist, welches zwischen einer Oberflächenseite des zumindest einen Feststellbremsbelags (22), welche der Bremsfläche des zumindest einen Feststellbremsbelags (22) und der Feststellbremsbelagträgeranordnung (21) gegenüberliegt, angeordnet ist.

3. Feststellbremsanordnung (20, 20', 20") nach Anspruch 1 oder 2, wobei das zumindest eine lokale Verschiebungselement (26, 26‴‴) ein Federelement (26, 26""') ist, welches auf einer seitlichen Oberflächenseite des zumindest einen Feststellbremsbelags (22, 22', ..., 22""') im Wesentlichen parallel zu der Axialrichtung und senkrecht zu einer Projektion der Drehbewegung der Bremsscheibe (10, 10', ..., 10‴‴) parallel zu dem zumindest einen Feststellbremsbelag (22, 22', ..., 22""') angeordnet ist, wobei eine vorbestimmte Federkraft in der Richtung der Projektion der Drehbewegung der Bremsscheibe (10, 10', ..., 10‴ʺ) parallel zu dem zumindest einen Feststellbremsbelag (22, 22', ..., 22‴ʺ) wirkt.

4. Feststellbremsanordnung (20, 20', 20") nach Anspruch 3, wobei die Feststellbremsanordnung (20, 20', 20") zumindest zwei Federelemente (26, 26‴ʺ) umfasst, wobei zumindest eines der zumindest zwei Federelemente (26, 26‴ʺ) auf der einen seitlichen Oberflächenseite angeordnet ist und das zumindest andere der zumindest zwei Federelemente (26, 26‴ʺ) auf der anderen gegenüberliegenden seitlichen Oberflächenseite angeordnet ist.

5. Feststellbremsanordnung (20, 20', 20") nach Anspruch 4, wobei die zumindest zwei Federelemente (26, 26‴ʺ) im Wesentlichen gleiche Federkräfte in entgegengesetzten Richtungen bereitstellen.

6. Feststellbremsanordnung (20, 20', 20") nach einem der vorstehenden Ansprüche, wobei die Feststellbremsanordnung (20, 20', 20") eine Überlastkupplung (27‴ʺ) umfasst, welche auf der Oberflächenseite des zumindest einen Feststellbremsbelags (22"") angeordnet ist, welche der Bremsfläche des zumindest einen Feststellbremsbelags (22"") gegenüberliegt.

7. Feststellbremsanordnung (20, 20', 20") nach einem der vorstehenden Ansprüche, wobei die Feststellbremsanordnung (20, 20', 20") ein axiales Federelement (28‴ʺ), welches auf der Oberflächenseite des zumindest einen Feststellbremsbelags (22‴‴) angeordnet ist, welche der Bremsfläche des zumindest einen Feststellbremsbelags (22‴‴) gegenüberliegt, mit einer vorbestimmten axialen Federkraft umfasst, welche in der Axialrichtung wirkt.

8. Bremsanordnung (1, 1", 1‴‴) für ein Fahrzeug, umfassend:
eine Bremsscheibe (10, 10', ..., 10‴‴), welche rund um eine Drehachse (R) drehbar ist und einen formschlüssigen Abschnitt einer Bremsscheibe (11, 11', ..., 11"") umfasst, und
die Feststellbremsanordnung (20, 20', 20") nach einem der Ansprüche 1 bis 7,
wobei der formschlüssige Abschnitt des Feststellbremsbelags (22a, 22a") des zumindest einen Feststellbremsbelags (22, 22', ..., 22‴‴) gegenüber dem formschlüssigen Abschnitt (11, 11', ..., 11"") der Bremsscheibe in zumindest einer Drehposition der Bremsscheibe (10, 10', ..., 10‴‴) angeordnet ist.

9. Bremsanordnung (1, 1", 1‴‴) nach Anspruch 8, wobei der formschlüssige Abschnitt der Bremsscheibe (11, 11', ..., 11ʺʺ) in einem äußeren oder inneren radialen Oberflächenabschnitt der Bremsscheibe (10, 10', ..., 10""") angeordnet ist, welcher sich in der radialen Richtung in Bezug auf die Drehachse (R) erstreckt.

10. Bremsanordnung (1, 1", 1""") nach Anspruch 8 oder 9, wobei die Bremsanordnung (1, 1", 1‴‴) weiter eine Betriebsbremsanordnung (30, 30") umfasst, welche zumindest einen Betriebsbremsbelag (32, 32") umfasst, welcher eine Betriebsbremsenbremsfläche als Kontaktfläche für die Bremsscheibe (10, 10', ..., 10‴‴) zur Aufbringung der Klemmkraft umfasst, und wobei die Betriebsbremsenbremsfläche des zumindest einen Betriebsbremsbelags (32, 32") in einer radialer Position in Bezug auf die Drehachse (R) außerhalb des formschlüssigen Abschnitts der Bremsscheibe (11, 11', ..., 11"") angeordnet ist.

11. Bremsanordnung (1) nach Anspruch 10, wobei ein radialer Abstand des Feststellbremsbelags (rPB) in Bezug auf die Drehachse (R) kleiner ist als ein radialer Abstand des Betriebsbremsbelags (rSB) in Bezug auf die Drehachse (R)1 oder wobei der radiale Abstand des Feststellbremsbelags (rPB) in Bezug auf die Drehachse (R) größer ist als der radiale Abstand des Betriebsbremsbelags (rSB) in Bezug auf die Drehachse (R).

12. Bremsanordnung (1, 1", 1‴‴) nach einem der Ansprüche 8 bis 11, wobei der formschlüssige Abschnitt der Bremsscheibe (11, 11', ..., 11"") und der formschlüssige Abschnitt des Feststellbremsbelags (22a, 22a") als entsprechende Verzahnungsabschnitte konfiguriert sind.

13. Bremsanordnung (1, 1", 1‴‴) nach einem der Ansprüche 8 bis 12, wobei der formschlüssige Abschnitt der Bremsscheibe (11') und/oder der formschlüssige Abschnitt des Feststellbremsbelags (22a, 22a") lösbar an der Bremsscheibe (10') bzw. an zumindest einem Feststellbremsbelag (22, 22', ..., 22‴‴) angebracht werden kann.

14. Bremsanordnung (1, 1", 1‴‴) nach einem der Ansprüche 10 oder 11 bis 13, soweit diese von Anspruch 10 abhängig sind, wobei die Bremsfläche des zumindest einen Feststellbremsbelags (22, 22', ..., 22‴‴) und/oder ein entsprechender Kontaktflächenabschnitt der Feststellbremse auf der Bremsscheibe (10, 10', ..., 10""") dazu konfiguriert ist/sind, die Reibungspaarung des zumindest einen Feststellbremsbelags (22, 22', ..., 22""") und der Bremsscheibe (10, 10', ..., 10""") mit einem Reibungskoeffizienten bereitzustellen, welcher sich von einem Reibungskoeffizienten durch die Reibungspaarung der Betriebsbremsfläche des zumindest einen Betriebsbremsbelags (32, 32") mit einem entsprechenden Betriebsbremskontaktflächenabschnitt der Bremsscheibe (10, 10', ..., 10""") unterscheidet, bevorzugt höher ist.

15. Fahrzeug, umfassend eine Bremsanordnung (1, 1", 1‴‴) nach einem der Ansprüche 8 bis 14,
wobei das Fahrzeug bevorzugt als ein Nutzfahrzeug, ein Lastkraftwagen, ein Anhänger, ein Bus und/oder als eine Kombination eines Zugfahrzeugs und eines Anhängers konfiguriert ist, und/oder
wobei das Fahrzeug vorzugsweise einen rein elektrischen, einen hybriden oder einen herkömmlichen Antriebsstrang umfasst.

## Revendications

1. Ensemble frein de stationnement (20, 20', 20") pour un véhicule comprenant :
au moins une plaquette de frein de stationnement (22, 22', ..., 22""") configurée pour appliquer une force de serrage sur un disque de frein (10, 10', ..., 10""") pouvant tourner autour d'un axe de rotation (R), dans lequel la au moins une plaquette de frein de stationnement (22, 22', ..., 22""") comprend une surface de freinage servant de surface de contact avec le disque de frein (10, 10', ..., 10""") pour appliquer la force de serrage, et
un ensemble porte-plaquette de frein de stationnement (21, 21', ..., 21‴‴) portant la au moins une plaquette de frein de stationnement (22, 22', ..., 22""") et configuré pour déplacer la au moins une plaquette de frein de stationnement (22, 22', ..., 22""") vers le disque de frein (10, 10', ..., 10""") dans une direction axiale sensiblement perpendiculaire à la surface de freinage de la au moins une plaquette de frein de stationnement (22, 22', ..., 22""") ou pour permettre un mouvement respectif de la au moins une plaquette de frein de stationnement (22, 22', ..., 22"""),
dans lequel la surface de freinage d'au moins une plaquette de frein de stationnement (22, 22', ..., 22‴‴) forme au moins partiellement une partie à complémentarité de forme (22a, 22a") de plaquette de frein de stationnement en correspondance avec une partie à complémentarité de forme (11, 11', ..., 11"") de disque de frein du disque de frein (10, 10',..., 10‴‴) pour un appariement de freinage, **caractérisé en ce que**
l'ensemble frein de stationnement (20, 20', 20") comprend au moins un organe de déplacement local (25, 26, 26""') agencé entre la au moins une plaquette de frein de stationnement (22, 22', ..., 22‴‴) et l'ensemble porte-plaquette de frein de stationnement (21, 21', ..., 21"""), configuré pour permettre un déplacement relatif de la au moins une plaquette de frein de stationnement (22, 22', ..., 22‴‴) par rapport à l'ensemble porte-plaquette de frein de stationnement (21, 21', ..., 21‴‴) dans une direction à l'intérieur du plan de surface de freinage.

2. Ensemble frein de stationnement (20) selon la revendication 1, dans lequel le au moins un organe de déplacement local (25) est un organe de palier (25) agencé entre un côté surface de la au moins une plaquette de frein de stationnement (22") opposé à la surface de freinage de la au moins une plaquette de frein de stationnement (22) et l'ensemble porte-plaquette de frein de stationnement (21).

3. Ensemble frein de stationnement (20, 20', 20") selon la revendication 1 ou 2, dans lequel le au moins un organe de déplacement local (26, 26""') est un organe de ressort (26, 26""') agencé sur un côté surface latérale de la au moins une plaquette de frein de stationnement (22, 22', ..., 22""') sensiblement parallèlement à la direction axiale et perpendiculairement à une projection du mouvement de rotation du disque de frein (10, 10', ..., 10""') parallèlement à la au moins une plaquette de frein de stationnement (22, 22', ..., 22""') avec une force de ressort prédéterminée agissant dans la direction de la projection du mouvement de rotation du disque de frein (10, 10', ..., 10‴ʺ) parallèlement à la au moins une plaquette de frein de stationnement (22, 22', ..., 22‴ʺ).

4. Ensemble frein de stationnement (20, 20', 20") selon la revendication 3, dans lequel l'ensemble frein de stationnement (20, 20', 20") comprend au moins deux organes de ressort (26, 26""'), dans lequel au moins l'un des au moins deux organes de ressort (26, 26‴ʺ) est agencé du côté surface latérale et le au moins un autre des au moins deux organes de ressort (26, 26""') est agencé sur l'autre côté surface latérale opposé.

5. Ensemble frein de stationnement (20, 20', 20") selon la revendication 4, dans lequel les au moins deux organes de ressort (26, 26""') fournissent des forces de ressort sensiblement égales dans des directions opposées.

6. Ensemble frein de stationnement (20, 20', 20") selon l'une quelconque des revendications précédentes, dans lequel l'ensemble frein de stationnement (20, 20', 20") comprend un embrayage de surcharge (27‴ʺ) agencé du côté surface de la au moins une plaquette de frein de stationnement (22"") opposé à la surface de freinage de la au moins une plaquette de frein de stationnement (22"").

7. Ensemble frein de stationnement (20, 20', 20") selon l'une quelconque des revendications précédentes, dans lequel l'ensemble frein de stationnement (20, 20', 20") comprend un organe de ressort axial (28""") agencé du côté surface de la au moins une plaquette de frein de stationnement (22""") opposé à la surface de freinage de la au moins une plaquette de frein de stationnement (22‴‴) avec une force de ressort axiale prédéterminée agissant dans la direction axiale.

8. Ensemble frein (1, 1", 1""") pour un véhicule, comprenant :
un disque de frein (10, 10', ..., 10""") pouvant tourner autour d'un axe de rotation (R) et comprenant une partie à complémentarité de forme (11, 11', ..., 11"") de disque de frein, et
l'ensemble frein de stationnement (20, 20', 20") selon l'une quelconque des revendications 1 à 7,
dans lequel la partie à complémentarité de forme (22a, 22a") de plaquette de frein de stationnement de la au moins une plaquette de frein de stationnement (22, 22', ..., 22‴‴) est agencée en regard de la partie à complémentarité de forme (11, 11', ..., 11"") de disque de frein dans au moins une position de rotation du disque de frein (10, 10', ..., 10‴‴).

9. Ensemble frein (1, 1", 1""") selon la revendication 8, dans lequel la partie à complémentarité de forme (11, 11', ..., 11"") de disque de frein est agencée dans une partie de surface radiale extérieure ou intérieure du disque de frein (10, 10', ..., 10""") s'étendant dans la direction radiale par rapport à l'axe de rotation (R).

10. Ensemble frein (1, 1", 1‴‴) selon la revendication 8 ou 9, dans lequel l'ensemble frein (1, 1", 1""") comprend en outre un ensemble frein de service (30, 30") comprenant au moins une plaquette de frein de service (32, 32") comprenant une surface de freinage de frein de service servant de surface de contact au disque de frein (10, 10', ..., 10""") afin d'appliquer la force de serrage, et dans lequel la surface de freinage de frein de service de la au moins une plaquette de frein de service (32, 32") est agencée dans une position radiale par rapport à l'axe de rotation (R) à l'extérieur de la partie à complémentarité de forme (11, 11', ..., 11"") de disque de frein.

11. Ensemble frein (1) selon la revendication 10, dans lequel une distance radiale de plaquette de frein de stationnement (rPB) par rapport à l'axe de rotation (R) est inférieure à une distance radiale de plaquette de frein de service (rSB) par rapport à l'axe de rotation (R), ou dans lequel la distance radiale de plaquette de frein de stationnement (rPB) par rapport à l'axe de rotation (R) est supérieure à la distance radiale de plaquette de frein de service (rSB) par rapport à l'axe de rotation (R).

12. Ensemble frein (1, 1", 1""") selon l'une quelconque des revendications 8 à 11, dans lequel la partie à complémentarité de forme (11, 11', ..., 11"") de disque de frein et la partie à complémentarité de forme (22a, 22a") de plaquette de frein de stationnement sont configurées sous forme de parties dentelées correspondantes.

13. Ensemble frein (1, 1", 1‴‴) selon l'une quelconque des revendications 8 à 12, dans lequel la partie à complémentarité de forme (11') de disque de frein et/ou la partie à complémentarité de forme (22a, 22a") de plaquette de frein de stationnement sont/est fixable(s) de manière amovible au disque de frein (10') ou à la au moins une plaquette de frein de stationnement (22, 22', ..., 22"""), respectivement.

14. Ensemble frein (1, 1", 1‴‴) selon l'une quelconque des revendications 10 ou 11 à 13, dans la mesure où elles dépendent de la revendication 10, dans lequel la surface de freinage de la au moins une plaquette de frein de stationnement (22, 22', ..., 22""") et/ou une partie respective de surface de contact de frein de stationnement du disque de frein (10, 10', ..., 10""") sont/est configurée(s) pour assurer l'appariement par friction de la au moins une plaquette de frein de stationnement (22, 22', ..., 22""") et du disque de frein (10, 10', ..., 10""") avec un coefficient de friction différent de, de préférence supérieur à, un coefficient de friction pour l'appariement par friction de la surface de freinage de frein de service de la au moins une plaquette de frein de service (32, 32") avec une partie respective de surface de contact de frein de service du disque de frein (10, 10', ..., 10‴‴).

15. Véhicule comprenant un ensemble frein (1, 1", 1""") selon l'une des revendications 8 à 14,
dans lequel le véhicule est, de préférence, configuré comme un véhicule utilitaire, un camion, une remorque, un bus et/ou comme une combinaison d'un véhicule tracteur et d'une remorque, et/ou
dans lequel le véhicule comprend, de préférence, un groupe motopropulseur exclusivement électrique, hybride ou classique.
